# EUROPÄISCHE PATENTSCHRIFT

(11) **EP 1 842 618 B1**
(45) Veröffentlichungstag und Bekanntmachung des Hinweises auf die Patenterteilung: **02.12.2009**
(21) Anmeldenummer: 07104447.3
(22) Anmeldetag: 20.03.2007
(51) Int. Cl.: B23K 31/02, F01N 7/18

(54) **Bauteilanordnung und zugehöriges Herstellungsverfahren**
Component assembly and associated manufacturing method
Structure d'élément et son procédé de fabrication

(30) Priorität: 04.04.2006 DE 102006016096
(43) Veröffentlichungstag der Anmeldung: 10.10.2007
(73) Patentinhaber: J. Eberspächer GmbH & Co. KG, 73730 Esslingen (DE)
(72) Erfinder: Spieth, Arnulf, 73269 Hochdorf (DE)
(74) Vertreter: Bongen, Renaud & Partner

(56) Entgegenhaltungen:
- EP-A- 1 657 414
- DE-U1- 29 804 765
- JP-A- 9 096 016
- US-A1- 2004 118 330

## Beschreibung

Die vorliegende Erfindung betrifft eine Bauteilanordnung aus zwei über wenigstens eine Schweißnaht miteinander verbundenen Bauteilen, mit den Merkmalen des Oberbegriffs des Anspruchs 1. Die Erfindung betrifft außerdem ein Verfahren zur Herstellung einer derartigen Bauteilanordnung.

In einer Vielzahl von Anwendungen ist es erforderlich, ein blechförmiges erstes Bauteil entlang einer Kante an einem anderen Bauteil zu befestigen. Hierbei kommen bevorzugt Schweißnähte zum Einsatz, die sich nur entlang eines Teilbereichs der Kante des ersten Bauteils erstrecken. Beispielweise werden auf diese Weise in Schalldämpfern einer Abgasanlage für eine Brennkraftmaschine, insbesondere in einem Kraftfahrzeug, Trennbleche oder Zwischenböden an einem Gehäuse des Schalldämpfers befestigt, die im Gehäuse zwei Räume voneinander trennen. Derartige Trennwände oder Zwischenböden können gleichzeitig zur Aussteifung des Gehäuses dienen. Grundsätzlich sind auch beliebige andere Anwendungen derartiger Bauteilanordnungen in Komponenten einer Abgasanlage oder auch außerhalb von Abgasanlagen denkbar. Außerdem ist eine derartige Bauteilanordnung nicht grundsätzlich auf metallische Bauteile beschränkt, da auch Kunststoff-Bauteile über Kunststoff-Schweißnähte miteinander verbindbar sind.

Im Betrieb oder bei der Verwendung einer Komponente, die mit einer Bauteilanordnung der eingangs genannten Art versehen ist, kann es zu einer Kraftübertragung zwischen den beiden Bauteilen über die jeweilige Schweißnaht kommen. Derartige Kräfte können beispielsweise durch mechanische Belastung und/oder durch thermisch bedingte Dehnungseffekte verursacht werden. Es hat sich gezeigt, dass ein über die Schweißnaht geführter Kraftfluss zwischen den beiden Bauteilen an Schweißnahtenden zu Kraftspitzen führt, was auf die dort gegebene Kerbwirkung zurückgeführt wird. Die mechanische Belastung der Bauteilanordnung ist somit an den Schweißnahtenden besonders groß. Dort besteht die Gefahr einer vorzeitigen Rissbildung und Beschädigung der Bauteilanordnung.

Aus der US 2004 0 118 330 A1 und aus der JP-09 096 016 A ist es jeweils bekannt, ein erstes blechförmiges Bauteil, das mit einer Kante an einem zweiten Bauteil anliegt und über eine Schweißnaht damit verbunden ist, in einem an ein Schweißnahtende angrenzenden Abschnitt mit einem das erste Bauteil durchdringenden Schlitz zu versehen.

Die vorliegende Erfindung beschäftigt sich mit dem Problem, für eine Bauteilanordnung der eingangs genannten Art eine Möglichkeit aufzuzeigen, die insbesondere die Haltbarkeitsdauer der Bauteilanordnung verbessert, wobei gleichzeitig eine preiswerte Herstellbarkeit für die Bauteilanordnung gewährleistet sein soll.

Dieses Problem wird durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, das blechförmige erste Bauteil in einem an ein Schweißnahtende angrenzenden Abschnitt mit einem Schlitz zu versehen, der durch seine Formgebung das jeweilige Schweißnahtende vom Kraftfluss durch das erste Bauteil entkoppelt. Dabei ist der Schlitz gezielt so geformt, dass er an der dem zweiten Bauteil zugewandten Kante des ersten Bauteils beginnt und nach einem um wenigstens 180° gebogenen Verlauf endet. Durch diese Bauweise wird erreicht, dass das jeweilige Schweißnahtende hinsichtlich des Kraftflusses vom ersten Bauteil entkoppelt ist, so dass an diesem Schweißnahtende die Ausbildung einer Kraftspitze stark reduziert ist. Des weiteren wird durch die spezielle Formgebung des Schlitzes erreicht, dass auch an einem von der Kante des ersten Bauteils entfernten Ende des Schlitzes die Entstehung einer Kraftspitze deutlich reduziert ist, da dieses Ende ebenfalls durch den Schlitz vom Kraftfluss durch das erste Bauteil getrennt bzw. entkoppelt ist. Die erfindungsgemäße Bauteilanordnung ist somit in einem das jeweilige Schweißnahtende und den diesem Schweißnahtende zugeordneten Schlitz umfassenden Bereich des ersten Bauteils quasi frei von kritischen Lastspitzen oder Spannungsspitzen, da die gezielte Formgebung des Schlitzes den Kraftfluss innerhalb des ersten Bauteils an den kritischen Stellen, also am jeweiligen Schweißnahtende und am von der Kante entfernten Schlitzende, vorbeiführt.

Durch die Beseitigung der gefährlichen Spannungsspitzen innerhalb der Bauteilanordnung kann deren Lebensdauer signifikant erhöht werden. Dies gilt umso mehr, wenn im Bereich beider Schweißnahtenden derartige Schlitze vorgesehen werden. Selbstverständlich kann die erhöhte Haltbarkeit auch dazu genutzt werden, preiswertere Materialien für die Bauteile und preiswertere Herstellungsmethoden für die gesamte Bauteilanordnung auszunutzen.

Grundsätzlich kann der jeweilige Schlitz durch einen geeigneten Schneidvorgang mit oder ohne Materialabtragung hergestellt werden. Bevorzugt wird jedoch eine Ausführungsform, bei welcher der jeweilige Schlitz dadurch hergestellt wird, dass ein Bereich des ersten Bauteils, der in einem an das jeweilige Schweißnahtende angrenzenden Abschnitt liegt, ausgestellt oder durchgestellt wird, z.B. durch einen entsprechenden Stanzvorgang. Die Grenze dieses aus- oder durchgestellten Bereichs bildet dann den jeweiligen Schlitz mit der gewünschten Form. Ein derartiger Stanzvorgang lässt sich spanlos realisieren, wodurch das dabei verwendete Werkzeug eine hohe Standzeit erreichen kann, was insgesamt die Herstellungskosten für die Bauteilanordnung reduziert. Die aus- oder durchgestellten Bereiche charakterisieren sich dadurch, dass sie bezüglich entlang des Schlitzes benachbarten Bereichen des ersten Bauteils in der Dickenrichtung des ersten Bauteils versetzt angeordnet sind.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine stark vereinfachte, prinzipielle Draufsicht auf eine Bauteilanördnung,
- Fig. 2: ein vergrößertes Detail der Bauteilanordnung in einem Schnitt entsprechend Schnittlinien II in Fig. 1,
- Fig. 3: eine Ansicht wie in Fig. 1, jedoch bei einer anderen nicht vom Schutzbereich der Ansprüche umfassten Ausführungsform.

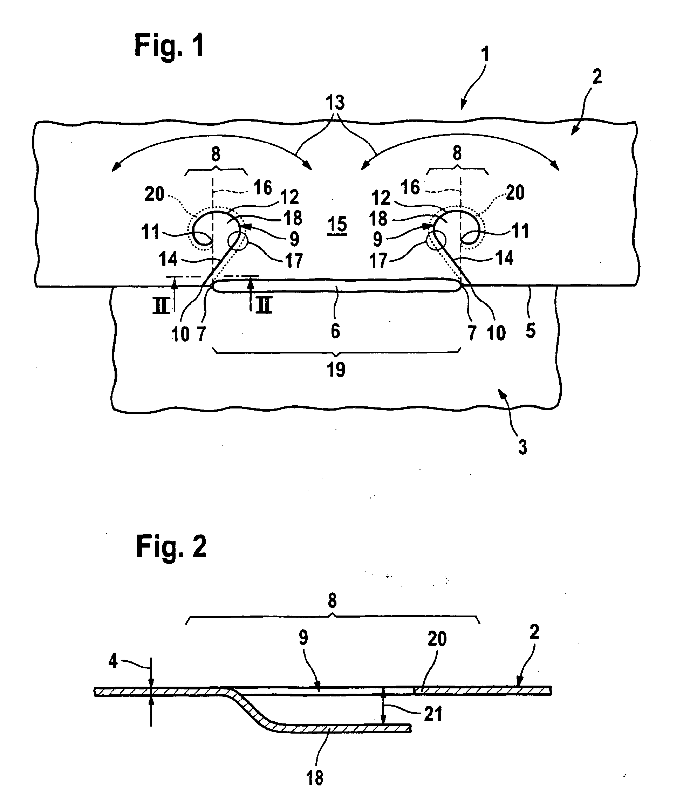

Entsprechend den Fig. 1 bis 3 umfasst eine Bauteilanordnung 1 zumindest zwei Bauteile, nämlich ein erstes Bauteil 2 und ein zweites Bauteil 3. Das erste Bauteil 2 ist blechförmig ausgestaltet, das heißt, das erste Bauteil 2 besitzt bei einem kartesischen Koordinatensystem in seiner in Fig. 2 eingezeichneten Dickenrichtung 4 oder Dicke 4 eine deutlich kleinere Dimension als in seiner Breitenrichtung und in seiner Längenrichtung. Das erste Bauteil 2 ist somit vergleichsweise flach. Das erste Bauteil 2 muss sich dabei nicht in einer Ebene erstrecken, sondern kann grundsätzlich einen beliebigen, dreidimensionalen Verlauf aufweisen. Im Unterschied dazu kann das zweite Bauteil 3 grundsätzlich eine beliebige Gestalt aufweisen. Insbesondere kann das zweite Bauteil 3 ebenfalls blechförmig ausgestaltet sein, wobei es dann allerdings gegenüber dem ersten Bauteil 2 geneigt verläuft.

Grundsätzlich können die Bauteile 2, 3 jeweils aus einem Kunststoff hergestellt sein. Besonders vorteilhaft ist die vorliegende Bauteilanordnung 1 dann, wenn die Bauteile 2, 3 jeweils aus Metall hergestellt sind. In diesem Fall handelt es sich beim ersten Bauteil 2 zweckmäßig um ein Blech oder Blechbauteil.

Bei einer bevorzugten Anwendung ist die Bauteilanordnung 1 in einer hier nicht näher dargestellten Komponente einer Abgasanlage vorgesehen oder ausgebildet. Bei dieser Komponente kann es sich beispielsweise um einen Schalldämpfer, insbesondere um einen Nachschalldämpfer oder um einen Mittelschalldämpfer oder um einen Vorschalldämpfer, handeln. Ebenso kann es sich bei der Komponente um ein Partikelfilter oder um einen Katalysator handeln. Ebenso sind Kombinationen aus Schalldämpfer, Partikelfilter und/oder Katalysator denkbar. Die Abgasanlage, deren Komponente mit der Bauteilanordnung 1 versehen sein kann, eignet sich zur Verwendung an einer Brennkraftmaschine, die insbesondere in einem Kraftfahrzeug angeordnet sein kann.

Beispielsweise ist das zweite Bauteil 2 eine Trennwand, die in einem Schalldämpfer, beispielsweise in einem Nachschalldämpfer, zwei Räume voneinander trennt. Dabei kann es sich bei einem der Räume um einen Absorptionsraum handeln, der mit einem Schallschluckstoff oder Absorptionsmaterial befüllt sein kann. Bei einem Nachschalldämpfer ist ein abgasführendes Rohr durch einen derartigen Absorptionsraum hindurchgeführt, wobei besagtes Rohr innerhalb des Absorptionsraums in radialer Richtung für Luftschall durchlässig ausgestaltet ist, beispielsweise mittels einer Perforation. Besagte Trennwand, also das erste Bauteil 2, ist dann an einem Gehäuse des Schalldämpfers befestigt, das dann das zweite Bauteil 3 der Bauteilanordnung 1 bildet.

In der Bauteilanordnung 1 liegt das erste Bauteil 2 mit einer Kante 5 am zweiten Bauteil 3 an. Das erste Bauteil 2 ist am zweiten Bauteil 3 mittels einer Schweißnaht 6 befestigt, die sich dabei entlang eines Teils der Kante 5 erstreckt. Die Schweißnaht 6 ist dabei kürzer als die Kante 5 und ist in ihrer Längsrichtung durch Schweißnahtenden 7 begrenzt. Die Schweißnaht 6 wird beispielsweise durch Auftragsschweißen unter Verwendung eines geeigneten Schweißmaterials hergestellt.

Bei der erfindungsgemäßen Bauteilanordnung 1 besitzt das erste Bauteil 2 zumindest in einem an das eine Schweißnahtende 7 angrenzenden Abschnitt 8 einen Schlitz 9. Im gezeigten, bevorzugten Beispiel ist das erste Bauteil 2 in beiden Abschnitten 8, die jeweils einem der Schweißnahtenden 7 zugeordnet sind, jeweils mit einem derartigen Schlitz 9 versehen. Der jeweilige Schlitz 9 durchdringt das erste Bauteil 2 in dessen Dickenrichtung 4 vollständig.

Bei der in Fig. 1 gezeigten Ausführungsform ist der jeweilige Schlitz 9 so geformt, dass er an der Kante 5 des ersten Bauteils 2 beginnt, beabstandet zur Kante 5 endet und zwischen seinen mit 10 bezeichneten Beginn und seinem mit 11 bezeichneten Ende einen gekrümmten oder gebogenen Verlauf 12 aufweist. Dieser gebogene Verlauf 12 ist dabei bezüglich einer auf dem ersten Bauteil 2 stehenden Achse, die sich insbesondere in der Dickenrichtung 4 des ersten Bauteils 2 erstreckt, um mindestens 180° gebogen.

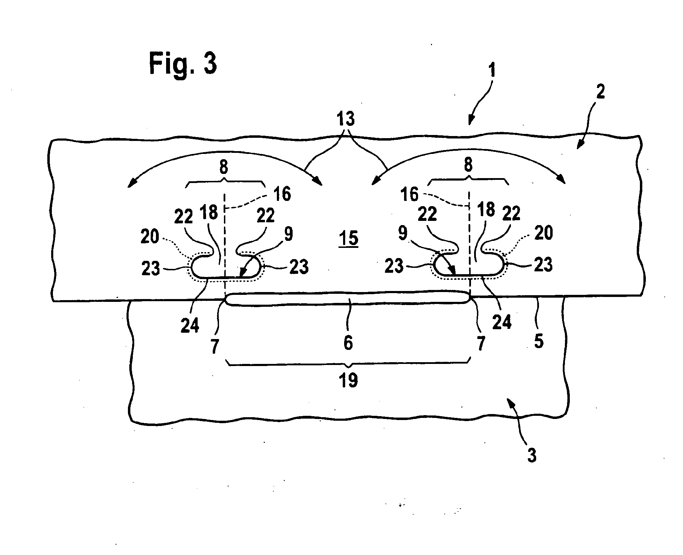

Bei der in Fig. 3 gezeigten Ausführungsform besitzt der jeweilige Schlitz 9 eine C-Form, die von der Kante 5 weggerichtet offen ist und die sowohl von der Kante 5 als auch von der Schweißnaht 6 beabstandet ist. Der jeweilige Schlitz 9 beginnt und endet somit innerhalb des ersten Bauteils 2. Die beiden Enden des jeweiligen Schlitzes 9 sind in Fig. 3 mit 22 bezeichnet. Die jeweilige C-Form bezieht sich dabei auf eine in der Dickenrichtung 4 orientierte Blickrichtung.

Die gezielte Formgebung des jeweiligen Schlitzes 9 bewirkt, dass ein durch Doppelpfeile angedeuteter Kraftfluss 13 innerhalb des ersten Bauteils 2 so zur Schweißnaht 6 hingeführt bzw. von dieser weggeführt wird, dass sich im Bereich der Schweißnahtenden 7 und im Bereich der Enden 11 bzw. 22 des jeweiligen Schlitzes 9 im wesentlichen keine Kraft- oder Spannungsspitzen ausbilden können. Hierzu ist die Formgebung der Schlitze 9 so gewählt, dass sowohl die Schweißnahtenden 7 als auch die Schlitzenden 11, 22 durch den jeweiligen Schlitz 9 vom Kraftfluss 13 getrennt bzw. entkoppelt sind. Durch besagten Schlitz 9 ist das Material des ersten Bauteils 2 im Bereich des jeweiligen Schweißnahtendes 7 und des jeweiligen Schlitzendes 11, 22 nicht an der Kraftübertragung beteiligt, wodurch der Kraftfluss 13 entsprechend umgeleitet wird.

Die Reduzierung der Kraft- und Spannungsspitzen an den Schweißnahtenden 7 und an den Schlitzenden 11 lässt sich bei der Ausführung gemäß Fig. 1 dadurch verbessern bzw. optimieren, dass der gebogene Verlauf 12 des jeweiligen Schlitzes 9 von der Schweißnaht 6 weggerichtet gebogen ist. Im Beispiel der Fig. 1 ist somit bei dem rechts gezeigten Schlitz 9 der gebogene Verlauf 12 im Uhrzeigersinn gebogen, während bei dem links dargestellten Schlitz 9 der gebogene Verlauf 12 entgegen dem Uhrzeigersinn gebogen ist. Die gebogenen Verläufe 12 sind bei den Schlitzen 9 hier um wenigstens 270° und insbesondere um etwa 360° gebogen. Hierdurch lässt sich das jeweilige Schlitzende 11 besonders effektiv vom Kraftfluss 13 entkoppeln. Grundsätzlich ist jedoch auch eine Ausführungsform denkbar, bei der der gebogene Verlauf 12 des jeweiligen Schlitzes 9 zu der Schweißnaht 6 hingerichtet gebogen ist.

Bei den hier gezeigten Ausführungsformen gemäß Fig. 1 besitzt der jeweilige Schlitz 9 außerdem einen geradlinigen Verlauf 14, der den jeweiligen gebogenen Verlauf 12 im wesentlichen geradlinig mit dem Beginn 10 des jeweiligen Schlitzes 9 verbindet. Um die Entkopplung des jeweiligen Schweißnahtendes 7 vom Kraftfluss 13 zu verbessern, kann der jeweilige geradlinige Verlauf 14 vorzugsweise zur Schweißnaht 6 hin geneigt sein.

In einem der Schweißnaht 6 zugeordneten Abschnitt des ersten Bauteils 2 lässt sich im ersten Bauteil 2 ein gedachter oder virtueller Streifen 15 definieren, der zum zweiten Bauteil 3 hin durch die Schweißnaht 6 und seitlich durch gedachte oder virtuelle Geraden 16 begrenzt ist. Die gedachten Geraden 16 stehen dabei jeweils senkrecht auf der Kante 5 und beginnen jeweils an einem der Schweißnahtenden 7. Vorzugsweise sind nun die Schlitze 9 gezielt so ausgestaltet, dass sie sich zumindest teilweise innerhalb des genannten Streifens 15 erstrecken.

Beispielsweise kann bei der in Fig. 1 gezeigten Ausführungsform ein durch einen Kreis symbolisierter Übergang 17 zwischen dem geradlinigen Verlauf 14 und dem gebogenen Verlauf 12 des jeweiligen Schlitzes 9 innerhalb des genannten Streifens 15 angeordnet sein. Auch bei der in Fig. 3 gezeigten Ausführungsform sind bei den Schlitzen 9 jeweils diejenigen Endabschnitte 23, die näher an der Schweißnaht 6 angeordnet sind, innerhalb des genannten Streifens 15 angeordnet. Hierdurch ergibt sich innerhalb des Streifens 15 eine gewisse Überlappung der Schlitze 9 relativ zur Schweißnaht 6.

Bei der in Fig. 3 gezeigten Ausführungsform besitzt der jeweilige Schlitz 9 somit jeweils zwei Endabschnitte 23, die jeweils eines der Enden 22 umfassen und die über einen mittleren, hier geradlinig ausgeführten Abschnitt 24 ineinander übergehen. Der geradlinige Abschnitt 24 ist vorzugsweise so orientiert, dass er sich parallel zur Kante 5 erstreckt. Innerhalb der Endabschnitte 23 ist der jeweilige Schlitz 9 vorzugsweise etwa um 180° gebogen. Grundsätzlich kann der jeweilige Endabschnitt 23 auch um mehr als 180° gebogen sein. Bevorzugt ist jedoch die hier gezeigte Ausführungsform, bei der die Endabschnitte 23 jeweils etwa halbkreisförmig gebogen sind. Die jeweilige Biegung der Endabschnitte 23 bezieht sich auch hier wieder auf eine auf dem ersten Bauteil 2 stehende Achse, die sich insbesondere in der Dickenrichtung 4 des ersten Bauteils 2 erstreckt. Die Biegung der beiden Endabschnitte 23 ist bei jedem Schlitz 9 so ausgeführt, dass die beiden Endabschnitte 23 zueinander konkav gebogen sind. Insbesondere kann der jeweilige Schlitz 9 in sich spiegelsymmetrisch ausgestaltet sein.

Vorzugsweise sind die den beiden Schweißnahtenden 7 zugeordneten Schlitze 9 zueinander spiegelsymmetrisch ausgestaltet.

Der jeweilige Schlitz 9 kann grundsätzlich auf beliebige Weise hergestellt werden. Insbesondere lässt sich der jeweilige Schlitz 9 in das erste Bauteil 2 einschneiden, wobei spanlose und spanende Schneidverfahren einsetzbar sind. Bevorzugt wird jedoch eine Ausführungsform, bei welcher der Schlitz 9 durch einen Stanzvorgang hergestellt wird, bei dem gleichzeitig ein Bereich 18 des ersten Bauteils 2 ausgestellt bzw. durchgestellt wird. Dies wird im folgenden näher erläutert.

Entsprechend Fig. 2 weist das erste Bauteil 2 in dem dem jeweiligen Schlitz 9 zugeordneten Abschnitt 8, der an die Schweißnaht 6 angrenzt, einen solchen Bereich 18 auf, der sich dadurch charakterisiert, dass er durch den jeweiligen Schlitz 9 von einem mit 19 bezeichneten Abschnitt der Kante 5 freigeschnitten ist. Besagter Kantenabschnitt 19 ist über die Schweißnaht 6 mit dem zweiten Bauteil 3 fest verbunden. Der freigeschnittene Bereich 18 charakterisiert sich außerdem dadurch, dass er zumindest teilweise gegenüber einem mit 20 bezeichneten und durch eine gepunktete Linie angedeuteten Bereich, der zum freigeschnittenen Bereich 18 entlang des Schlitzes 9 benachbart angeordnet ist, in der Dickenrichtung 4 versetzt angeordnet ist. Erreicht wird diese versetzte Anordnung des freigeschnittenen Bereichs 18 gegenüber dem entlang des Schlitzes 9 benachbarten Bereich 20 durch das zuvor genannte Aus- bzw. Durchstellen dieses Bereichs 18 relativ zum übrigen ersten Bauteil 2. Gleichzeitig mit dem Ausstell- bzw. Durchstellvorgang zur Realisierung des mit 21 bezeichneten Versatzes des genannten Bereichs 18 wird der Schlitz 9 hergestellt. Der Versatz 21 zwischen dem freigeschnittenen Bereich 18 und dem entlang des Schlitzes 9 angrenzenden Bereich 20 kann auch deutlich kleiner als in Fig. 2 dargestellt ausfallen. Insbesondere reicht es grundsätzlich aus, den Versatz 21 so groß zu wählen wie die Dicke 4 des ersten Bauteils 2.

Neben der vereinfachten Herstellung des Schlitzes 9 hat die gewählte Herstellungsmethode außerdem den Vorteil, dass im ersten Bauteil 2 durch die Ausbildung des jeweiligen Schlitzes 9 keine wesentliche Öffnung gebildet wird. Dies ist insbesondere dann von entscheidendem Vorteil, wenn das erste Bauteil 2 zur Begrenzung eines befüllten Raums dient, z.B. als Trennwand für einen mit Absorptionsmaterial befüllten Absorptionsraum. Das Absorptionsmaterial kann nicht durch den Schlitz 9 aus dem Absorptionsraum austreten. Durch geeignete Wahl des Versatzes 21 bleibt eine durch die Form des Schlitzes 9 gegebenenfalls entstehende Öffnung durch den aus- oder durchgestellten Bereich 18 im wesentlichen verschlossen.

Die Herstellung der Bauteilanordnung 1 erfolgt vorzugsweise so, dass innerhalb des zur Ausbildung des jeweiligen Schlitzes 9 vorgesehenen Abschnitts 8 des ersten Bauteils 2 zunächst der jeweilige Bereich 18 aus- oder durchgestellt wird, insbesondere durch einen entsprechenden Stanzvorgang, wobei der jeweilige Schlitz 9 ausgebildet wird. Anschließend wird das erste Bauteil 2 am zweiten Bauteil 3 mit Hilfe der Schweißnaht 6 befestigt.

## Patentansprüche

1. Bauteilanordnung mit einem blechförmigen ersten Bauteil (2), das mit einer Kante (5) an einem zweiten Bauteil (3) anliegt und über wenigstens eine sich entlang der Kante (5) erstreckende Schweißnaht (6) mit dem zweiten Bauteil (3) fest verbunden ist, wobei das erste Bauteil (2) in wenigstens einem an ein Schweißnahtende (7) angrenzenden Abschnitt (8) einen das erste Bauteil (2) durchdringenden Schlitz (9) aufweist,
**dadurch gekennzeichnet,**
**dass** der Schlitz (9) an der Kante (5) des ersten Bauteils beginnt und bis zu seinem von der Kante (5) des ersten Bauteils (2) entfernten Ende (11) einen um wenigstens 180° gebogenen Verlauf (12) aufweist.

2. Bauteilanordnung nach Anspruch 1,
**dadurch gekennzeichnet,**
**dass** der gebogene Verlauf (12) des jeweiligen Schlitzes (9) von der Schweißnaht (6) weggerichtet gebogen ist.

3. Bauteilanordnung nach Anspruch 1 oder 2,
**dadurch gekennzeichnet,**
**dass** der gebogene Verlauf (12) des jeweiligen Schlitzes (9) um wenigstens 270° oder um etwa 360° gebogen ist.

4. Bauteilanordnung nach einem der Ansprüche 1 bis 3,
**dadurch gekennzeichnet,**
**dass** der gebogene Verlauf (12) des jeweiligen Schlitzes (9) bezüglich einer sich in einer Dickenrichtung (4) des ersten Bauteils (2) erstreckenden Achse gebogen ist.

5. Bauteilanordnung nach einem der Ansprüche 1 bis 4,
**dadurch gekennzeichnet,**
**dass** der jeweilige Schlitz (9) zwischen seinem an der Kante (5) des ersten Bauteils (2) liegenden Beginn (10) und dem gebogenen Verlauf (12) einen im Wesentlichen geradlinigen Verlauf (14) aufweist.

6. Bauteilanordnung nach Anspruch 5,
**dadurch gekennzeichnet,**
**dass** der geradlinige Verlauf (14) des jeweiligen Schlitzes (9) zur Schweißnaht (6) hin geneigt ist.

7. Bauteilanordnung nach Anspruch 5 oder 6,
**dadurch gekennzeichnet,**
**dass** ein Übergang (17) zwischen dem geradlinigen Verlauf (14) und dem gebogenen Verlauf (12) des jeweiligen Schlitzes (9) innerhalb eines Streifens (15) des ersten Bauteils (2) angeordnet ist, der seitlich durch senkrecht auf der Kante (5) des ersten Bauteils (2) stehende und an den Schweißnahtenden (7) beginnende gedachte Geraden (16) begrenzt ist.

8. Bauteilanordnung nach einem der Ansprüche 1 bis 7,
**dadurch gekennzeichnet,**
**dass** ein Bereich (18) des an die Schweißnaht (6) angrenzenden Abschnitts (8) des ersten Bauteils (2), der durch den jeweiligen Schlitz (9) von einem über die Schweißnaht (6) fest mit dem zweiten Bauteil (3) verbundenen Abschnitt (19) der Kante (5) des ersten Bauteils (2) freigeschnitten ist, zumindest teilweise gegenüber einem entlang des Schlitzes (9) benachbarten Bereich (20) des ersten Bauteils (2) in einer Dickenrichtung (4) des ersten Bauteils (2) versetzt angeordnet ist.

9. Bauteilanordnung nach Anspruch 8,
**dadurch gekennzeichnet,**
**dass** der Versatz (21) des freigeschnittenen Bereichs (18) durch Aus- oder Durchstellen dieses Bereichs (18) relativ zum übrigen ersten Bauteil (2) realisiert ist.

10. Bauteilanordnung nach Anspruch 8 oder 9,
**dadurch gekennzeichnet,**
**dass** der jeweilige Schlitz (9) durch das Aus- oder Durchstellen des jeweiligen Bereichs (19) hergestellt ist.

11. Bauteilanordnung nach einem der Ansprüche 1 bis 10,
**dadurch gekennzeichnet,**
**dass** der jeweilige Schlitz (9) so ausgestaltet ist, dass er sich zumindest teilweise in einem Streifen (15) des ersten Bauteils (2) erstreckt, der seitlich durch senkrecht auf der Kante (5) des ersten Bauteils (2) stehende und an den Schweißnahtenden (7) beginnende gedachte Geraden (16) begrenzt ist.

12. Bauteilanordnung nach einem der Ansprüche 1 bis 11,
**dadurch gekennzeichnet,**
**dass** das erste Bauteil (2) in beiden jeweils an ein Schweißnahtende (7) angrenzenden Abschnitten (8) mit einem derartigen Schlitz (9) versehen ist.

13. Bauteilanordnung nach einem der Ansprüche 1 bis 12,
**dadurch gekennzeichnet,**
**dass** das erste Bauteil (2) und das zweite Bauteil (3) jeweils aus Metall hergestellt sind.

14. Bauteilanordnung nach einem der Ansprüche 1 bis 13,
**dadurch gekennzeichnet,**
- **dass** die Bauteilanordnung (1) in einer Komponente einer Abgasanlage einer Brennkraftmaschine, insbesondere in einem Kraftfahrzeug ausgebildet, und/oder
- **dass** die Bauteilanordnung (1) in einem Schalldämpfer ausgebildet ist, und/oder
- **dass** das erste Bauteil (2) ein Trennblech ist, das in einem Schalldämpfer zwei Räume voneinander trennt, und/oder
- **dass** das zweite Bauteil (3) ein Gehäuse des Schalldämpfers ist, und/oder
- **dass** in einem der Räume des Schalldämpfers Schallschluckmaterial angeordnet ist.

15. Verfahren zum Herstellen einer Bauteilanordnung (1) nach einem der Ansprüche 1 bis 14,
**gekennzeichnet durch** folgende Schritte:
- Aus- oder Durchstellen von wenigstens einem Bereich (18) des ersten Bauteils (2) unter Ausbildung des jeweiligen Schlitzes (9),
- Befestigen des ersten Bauteils (2) am zweiten Bauteil (3) mittels der jeweiligen Schweißnaht (6).

## Claims

1. A component arrangement with a metal sheet-like first component (2) which with an edge (5) abuts a second component (3) and via a weld seam (6) extending along the edge (5) is permanently joined with the second component (3), wherein the first component (2) in at least one section (8) adjoining a weld seam end (7) comprises a slit (9) penetrating the first component (2),
**characterized in that**
the slit (9) starts at the edge (5) of the first component and as far as to its end (11) distant from the edge (5) of the first component (2) comprises a course (12) bent by at least 180°.

2. The component arrangement according to Claim 1,
**characterized in that**
the bent course (12) of the respective slit (9) is bent directed away from the weld seam (6).

3. The component arrangement according to Claim 1 or 2,
**characterized in that**
the bent course (12) of the respective slit (9) is bent by at least 270° or by approximately 360°.

4. The component arrangement according to any one of the Claims 1 to 3,
**characterized in that**
the bent course (12) of the respective slit (9) is bent with respect to an axis extending in a thickness direction (4) of the first component (2).

5. The component arrangement according to any one of the Claims 1 to 4,
**characterized in that**
the respective slit (9) between its start (10) located on the edge (5) of the first component (2) and the bent course (12) has a substantially straight-line course (14).

6. The component arrangement according to Claim 5,
**characterized in that**
the straight-line course (14) of the respective slit (9) is inclined towards the weld seam (6).

7. The component arrangement according to Claim 5 or 6,
**characterized in that**
a transition (17) is arranged between the straight-line course (14) and the bent course (12) of the respective slit (9) within a strip (15) of the first component (2), which is limited laterally through imaginary straight lines (16) which perpendicularly stand on the edge (5) of the first component (2) and start at the weld seam ends (7).

8. The component arrangement according to any one of the Claims 1 to 7,
**characterized in that**
a region (18) of the section (8) of the first component (2) adjoining the weld seam (6), which is cut free through the respective slit (9) from a section (19) of the edge (5) of the first component (2) permanently joined with the second component (3) via the weld seam (6), is arranged offset in a thickness direction (4) of the first component (2) at least partially with respect to a region (20) of the first component (2) adjoining along the slit (9).

9. The component arrangement according to Claim 8,
**characterized in that**
the offset (21) of the cut-free region (18) relative to the remaining first component (2) is realised through positioning-out or positioning-through of this region (18).

10. The component arrangement according to Claim 8 or 9,
**characterized in that**
the respective slit (9) is produced through the positioning-out or positioning-through of the respective region (19).

11. The component arrangement according to any one of the Claims 1 to 10,
**characterized in that**
the respective slit (9) is so designed that it at least partially extends in a strip (15) of the first component (2) which is laterally limited through imaginary straight lines (16) perpendicularly standing on the edge (5) of the first component (2) and starting at the weld seam ends (7).

12. The component arrangement according to any one of the Claims 1 to 11,
**characterized in that**
the first component (2) in both sections (8) each adjoining a weld seam end (7) is provided with such a slit (9).

13. The component arrangement according to any one of the Claims 1 to 12,
**characterized in that**
the first component (2) and the second component (3) are each produced of metal.

14. The component arrangement according to any one of the Claims 1 to 13,
**characterized in that**
- the component arrangement (1) is embodied in a component of an exhaust system of an internal combustion engine, more preferably in a motor vehicle, and/or
- the component arrangement (1) is embodied in a silencer and/or
- the first component (2) is a separating plate which in a silencer separates two spaces from each other and/or
- the second component (3) is a housing of the silencer and/or
- sound absorbent material is arranged in one of the spaces of the silencer.

15. A method for producing a component arrangement (1) according to any one of the Claims 1 to 14,
**characterized by** the following steps:
- Positioning-out or positioning-through of at least one region (18) of the first component (2) subject to the formation of the respective slit (9),
- fastening of the first component (2) to the second component (3) by means of the respective weld seam (6).

## Revendications

1. Agencement de composant avec un premier composant (2) en forme de tôle, lequel s'applique avec une arête (5) sur un second composant (3) et est relié fixement au second composant (3) par au moins un joint de soudure (6) s'étendant le long de l'arête (5), le premier composant (2) présentant dans au moins une partie (8) contiguë à une extrémité de joint de soudure (7) une fente (9) traversant le premier composant (2),
**caractérisé en ce que**
la fente (9) commence sur l'arête (5) du premier composant et présente un tracé (12) courbé d'au moins 180° jusqu'à son extrémité (11) éloignée de l'arête (5) du premier composant (2).

2. Agencement de composant selon la revendication 1,
**caractérisé en ce que**
le tracé (12) courbé de la fente (9) respective est plié orienté en partant du joint de soudure (6).

3. Agencement de composant selon la revendication 1 ou 2,
**caractérisé en ce que**
le tracé (12) courbé de la fente (9) respective est plié d'au moins 270° ou d'au moins 360°.

4. Agencement de composant selon l'une quelconque des revendications 1 à 3,
**caractérisé en ce que**
le tracé (12) courbé de la fente (9) respective est plié par rapport à un axe s'étendant dans une direction d'épaisseur (4) du premier composant (2).

5. Agencement de composant selon l'une quelconque des revendications 1 à 4,
**caractérisé en ce que**
la fente (9) respective présente un tracé (14) sensiblement rectiligne entre son début (10) situé sur l'arête (5) du premier composant (2) et le tracé (12) courbé.

6. Agencement de composant selon la revendication 5,
**caractérisé en ce que**
le tracé (14) rectiligne de la fente (9) respective est incliné en direction du joint de soudure (6).

7. Agencement de composant selon la revendication 5 ou 6,
**caractérisé en ce que**
une transition (17) est disposée entre le tracé (14) rectiligne et le tracé (12) courbé de la fente (9) respective à l'intérieur d'une bande (15) du premier composant (2), laquelle transition est délimitée sur le côté par des droites (16) imaginaires disposées verticalement sur l'arête (5) du premier composant (2) et commençant sur les extrémités du joint de soudure (7).

8. Agencement de composant selon l'une quelconque des revendications 1 à 7,
**caractérisé en ce que**
une zone (18) de la partie (8), contiguë au joint de soudure (6), du premier composant (2), qui est libérée par découpage par la fente (9) respective d'une partie (19), reliée par le joint de soudure (6) fixement au second composant (3), de l'arête (5) du premier composant (2), est disposée décalée au moins en partie par rapport à une zone (20), voisine le long de la fente (9), du premier composant (2) dans une direction d'épaisseur (4) du premier composant (2).

9. Agencement de composant selon la revendication 8,
**caractérisé en ce que**
le déport (21) de la zone (18) libérée par découpage est réalisé par l'enlèvement ou la traversée de cette zone (18) par rapport au premier composant (2) restant.

10. Agencement de composant selon la revendication 8 ou 9,
**caractérisé en ce que**
la fente (9) respective est préparée par l'enlèvement ou la traversée de la zone (19) respective.

11. Agencement de composant selon l'une quelconque des revendications 1 à 10,
**caractérisé en ce que**
la fente (9) respective est conçue de telle sorte qu'elle s'étend au moins en partie dans une bande (15) du premier composant (2), laquelle est délimitée sur le côté par des droites (16) imaginaires disposées verticalement sur l'arête (5) du premier composant (2) et commençant sur les extrémités de joint de soudure (7).

12. Agencement de composant selon l'une quelconque des revendications 1 à 11,
**caractérisé en ce que**
le premier composant (2) est doté dans les deux parties (8) contiguës respectivement à une extrémité de joint de soudure (7) d'une fente (9) de ce type.

13. Agencement de composant selon l'une quelconque des revendications 1 à 12,
**caractérisé en ce que**
le premier composant (2) et le second composant (3) sont fabriqués chacun en métal.

14. Agencement de composant selon l'une quelconque des revendications 1 à 13,
**caractérisé en ce que**
- l'agencement de composant (1) est réalisé dans un composant d'une installation d'échappement d'un moteur à combustion interne, en particulier sur un véhicule, et/ou
- **en ce que** l'agencement de composant (1) est réalisé dans un silencieux, et/ou
- **en ce que** le premier composant (2) est une tôle de séparation, qui sépare deux espaces dans un silencieux, et/ou
- **en ce que** le second composant (3) est un boîtier du silencieux, et/ou
- **en ce que** du matériau d'absorption sonore est disposé dans l'un des espaces du silencieux.

15. Procédé pour la fabrication d'un agencement de composant (1) selon l'une quelconque des revendications 1 à 14,
**caractérisé par** les étapes suivante :
- enlèvement ou traversée d'au moins une zone (18) du premier composant (2) en formant la fente (9) respective,
- fixation du premier composant (2) sur le second composant (3) au moyen du joint de soudure (6) respectif.
